**Europäisches Patentamt**

**European Patent Office**

**Office européen des brevets**

(19)

(11) Veröffentlichungsnummer : **0 475 173 B1**

(12) **EUROPÄISCHE PATENTSCHRIFT**

(45) Veröffentlichungstag der Patentschrift :
02.03.94 Patentblatt 94/09

(51) Int. Cl.⁵ : **B01J 23/50, B01D 53/36**

(21) Anmeldenummer : **91114242.0**

(22) Anmeldetag : **24.08.91**

(54) **Verfahren zur katalytischen Zersetzung von reinem oder in Gasgemischen enthaltenem Distickstoffmonoxid.**

(30) Priorität : **13.09.90 DE 4029061**

(43) Veröffentlichungstag der Anmeldung :
**18.03.92 Patentblatt 92/12**

(45) Bekanntmachung des Hinweises auf die
Patenterteilung :
**02.03.94 Patentblatt 94/09**

(84) Benannte Vertragsstaaten :
**AT BE CH DE DK ES FR GB IT LI NL SE**

(56) Entgegenhaltungen :
**EP-A- 0 427 287**
**DE-A- 3 543 640**
**US-A- 3 804 595**
**CANADIAN JOURNAL OF CHEMISTRY Bd. 37,
1959, OTTAWA Seiten 583 - 589; K.E. HAYES:
'THE METAL-CATALYZED DECOMPOSITION
OF NITROUS OXIDE'**

(73) Patentinhaber : **BASF Aktiengesellschaft
Carl-Bosch-Strasse 38
D-67063 Ludwigshafen (DE)**

(72) Erfinder : **Aichinger, Heinrich, Dr.
Moltkestrasse 19
W-6800 Mannheim 1 (DE)**
Erfinder : **Boehning, Karl-Heinz, Dr.
Bruesseler Ring 32
W-6700 Ludwigshafen (DE)**
Erfinder : **Herzog, Klaus, Dr.
Oggersheimer Strasse 112
W-6700 Ludwigshafen (DE)**
Erfinder : **Wistuba, Hermann, Dr.
Mudauer Ring 227
W-6800 Mannheim 51 (DE)**
Erfinder : **Buerger, Gert, Dr.
Hoeferstrasse 18
W-6800 Mannheim 24 (DE)**
Erfinder : **Schwarzmann, Matthias, Dr.
Carl-Bosch-Strasse 54
W-6703 Limburgerhof (DE)**
Erfinder : **Herrmann, Guenter, Dr.
Haeusserstrasse 51
W-6900 Heidelberg (DE)**

EP 0 475 173 B1

## Beschreibung

Die Erfindung betrifft einen Katalysator zur katalytischen Zersetzung von reinem oder in Gasgemischen enthaltenem Distickstoffmonoxid.

Die katalytische Zersetzung von Distickstoffmonoxid (Lachgas) ist bereits lange bekannt und in zahlreichen Publikationen im Rahmen kinetischer Untersuchungen beschrieben worden. Bereits 1936 wird in Gmelins Handbuch der anorganischen Chemie, Stickstoff, 8. Auflage Seite 573 ff, die Zersetzung von Distickstoffmonoxid im Quarzgefäß ohne und in Gegenwart von verschiedenen Katalysatoren wie $SiO_2$, Platinfolie, Titandioxid, Platinschwarz, $Al_2O_3$, Holzkohle sowie Thoriumdioxid bei verschiedenen Temperaturen untersucht.

Technisches Interesse an der Zersetzung von Distickstoffmonoxid zu Stickstoff und Sauerstoff ging von der NASA aus, die ausgehend von Ammonnitrat über Lachgas die Zersetzung in die Elemente nutzen wollte, um aus einer leicht handhabbaren Verbindung Atemluft für Astronauten zu erzeugen (Chem. Abstracts 63, 1481, (1965)). Als Katalysatoren wurden als geeignet beschrieben: Nickeloxid, Rhodium oder Platin auf Aluminiumoxid und Kobaltoxid.

Ein weiteres Anwendungsgebiet stellt die Beseitigung von $N_2O$ in Anästhesiegasen dar. So wird gemäß der JP-OS 54-11090 das Gas mit aktiviertem Kohlenstoff in Berührung gebracht, an dem der $N_2O$-Gehalt durch Adsorption auf $\leq$ 50 ppm verringert wird. Gemäß der JP-OS 61-45487 wird das überschüssige $N_2O$ bei 150 bis 550°C in Gegenwart von Katalysatoren aus einer Mischung von Elementen der Eisengruppe und der Seltenen Erden zu $N_2$ und $O_2$ zersetzt. In der JP-OS 55-31463 werden zu diesem Zweck Platin, Palladium, Rhodium, Iridium und/oder Ruthenium enthaltende Katalysatoren vorgeschlagen. Nach der JP-OS 61-50650 wird das $N_2O$ bei Temperaturen von 500°C an Aluminiumoxid, das jeweils 5 Gew.-% CuO und $Cr_2O_3$ enthält, zersetzt. Zur Entfernung von $N_2O$, NO und $N_2O_3$ aus Verbrennungsabgasen werden diese gemäß der JP-OS 61-53142 bei Temperaturen >200°C über Katalysatoren geleitet, die aus Aluminiumoxid, das durch Calcinieren von $\gamma$-Aluminiumoxid bei Temperaturen von 1150 bis 1550°C erhalten worden ist, und Kobalt-, Kupfer- und Manganoxiden als katalytische Komponenten bestehen.

Gemäß der DE-OS 35 43 640 wird Distickstoffmonoxid bei erhöhten Temperaturen in Gegenwart von palladiumhaltigen Katalysatoren zersetzt.

Die Kinetik der thermisch-katalytischen Zersetzung von Distickstoffmonoxid wird in den Arbeiten von Steacie und Folkins in Canad. Journal of Research 15, 1937, 237-246 und von Hayes in Canadian Journal of Chemistry 37, 1959, 583-589 untersucht. Dabei werden als Katalysatoren reine Silber-Katalysatoren, Silber-Gold-Legierungen mit 1,14 Gew.-% Au und Silber-Calcium-Legierungen mit 0,11 bis 1,70 Gew.-% Ca zugesetzt. Bei diesen kinetischen Untersuchungen wurde festgestellt, daß die Zersetzungsreaktion an diesen Silberkatalysatoren ebenso wie an Platinkatalysatoren durch den gebildeten Sauerstoff ebenso wie durch dem Gas zugesetzten Sauerstoff erheblich verzögert wird.

Der vorliegenden Erfindung lag daher die Aufgabe zugrunde, einen Silber enthaltenden Katalysator zur Zersetzung von reinem oder in Gasgemischen enthaltenem Distickstoffmonoxid bei erhöhten Temperaturen in die Elemente in Gegenwart von silberhaltigen Katalysatoren bereitzustellen, bei dem die Zersetzungsreaktion auch über einen langen Zeitraum ohne Desaktivierung des Katalysators verläuft und bei dem insbesondere nicht nur reines Distickstoffmonoxid, sondern dieses auch im Gemisch mit anderen Gasen, z.B. Luft und anderen Stickoxiden, wie Stickstoffmonoxid und Stickstoffdioxid problemlos in die Elemente zersetzt werden kann.

Es wurde nun gefunden, daß diese Aufgabe dadurch gelöst werden kann, daß das Silber auf einen Träger aus Aluminiumoxid mit einer BET-Oberfläche von 5 bis 25 $m^2/g$ aufgebracht ist.

Der erfindungsgemäß eingesetzte Katalysator enthält 5 bis 25 Gew.-%, vorzugsweise 10 bis 20 Gew.-% metallisches Silber, jeweils bezogen auf das Gewicht des eingesetzten Trägers.

Der erfindungemäße silberhaltige Katalysator kann auf an sich bekannte Weise hergestellt werden. Hierzu wird auf den Träger eine reduzierbare Silberverbindung in Form von wäßrigen Lösungen aufgebracht und diese anschließend an die Trocknung in die metallische Form überführt. Geeignete reduzierbare Silberverbindungen sind z.B. Silberoxalat, Silberformiat, Silberlactat und Silberoxid, das z.B. durch Fällen von Silbersalzlösungen mit Alkalien hergestellt worden ist. (Vgl. DE-AS 1 279 669 und DE-AS 1 211 607). Auch Silbernitrat ist als Tränklösung geeignet, das dann zu metallischem Silber reduziert wird (US-PS 3,575,888). Geeignet ist auch ein in der DE-0S 21 59 346 beschriebenes Verfahren, bei dem der Träger mit der wäßrigen Lösung eines oder mehrerer Silbersalze und eines oder mehrerer organischer Amine getränkt wird, wonach durch Erhitzung die die Oberfläche bedeckende Lösung eingedampft und das mit dem Amin komplexierte Silbersalz anschließend zu metallischem Silber reduziert wird.

Die genannten Silber-Amin-Komplexsalze lassen sich leicht thermisch zersetzen.

Beispiele für solche Amine sind primäre Amine, die Alkylreste mit 1 bis 8 C-Atomen besitzen, Polyamine der Alkane bis etwa zum Hexan, einfache alicyclische Amine wie Cyclohexylamin und einfache heterocyclische Amine wie Pyrrolidin, Piperidin und Morpholin. Ammoniak ist zwar ebenfalls geeignet, jedoch wegen der leichten Bildung von explosivem Silberstickstoff technisch weniger empfehlenswert.

Das Anion des Silberkomplexes ist weitgehend frei wählbar; das Anion bzw. dessen Zersetzungsprodukte müssen lediglich beim Erhitzen flüchtig sein. verwendbar sind z.B. somit nahezu alle Carboxylate, Carbonat, Isocyanat, Cyanid, Nitrit und Nitrat.

Bevorzugt sind Aminkomplexe des Silbernitrats, weil Silbernitrat die billigste und die in reinster Form erhältliche Silberchemikalie ist. Zweckmäßigerweise setzt man der Imprägnierlösung zur Komplexbildung mindestens soviel Amin zu, wie zur stöchiometrischen Ausbildung des Komplexes mit der Formel

$$Ag(amin)_2\ NO_3$$

benötigt wird. Hierin bedeutet "amin" je eine Aminogruppe oder gleichwertige Liganden.

Nach der Tränkung des Trägers mit der Silber-Amin-Komplex-Verbindung wird der Träger getrocknet und der Aminkomplex bei Temperaturen von 180 bis 300°C zu metallischem Silber zersetzt. Dies kann derart geschehen, daß der imprägnierte Träger in einem heizbaren Schrank oder Ofen einer Wärmebehandlung in einer Atmosphäre unterworfen wird, die gegebenenfalls mit Wasserdampf mehr oder weniger gesättigt ist.

Bei dem erfinduflgsgemäßen Verfahren wird Distickstoffmonoxid oder ein Distickstoffmonoxid enthaltendes Gasgemisch bei Temperaturen von 200 bis 600°C über den Silber-Träger-Katalysator geleitet und dabei zu Stickstoff und Sauerstoff zersetzt. Dabei können Raumgeschwindtgkeiten von 1000 bis 10.000 $h^{-1}$ eingehalten werden.

Das erfindungsgemäße Verfahren kann so durchgeführt werden, daß man reines Distickstoffmonoxid oder Distickstoffmonoxid enthaltende Gasgemische oder Distickstoffmonoxid enthaltendes Abgas in einem Ofen oder Wärmetauscher auf die notwendige Reaktionstemperatur vorheizt und dann durch ein mit dem Silberkatalysator gefülltes Reaktionsrohr leitet. Das Vorheizen des Reaktionsgases kann auch gleichzeitig im Reaktionsrohr durch eine vorgeschaltete Inertmaterialschicht erfolgen. Zum Aufheizen des Katalysators und/oder der Inertmaterials kann die Reaktionswärme des abreagierten Gases verwendet werden.

Mit dem erfindungsgcmäßen Katalysator gelingt es, die katalytische Zersetzung von Distickstoffmonoxid sowohl ohne als auch in Gegenwart größerer Mengen an Stickoxiden (NO, $NO_2$) und/oder Wasser ohne merkliche Aktivitätseinbußen des Katalysators durchzuführen.

Die folgenden Beispiele dienen zur weiteren Erläuterung der Erfindung.

Zur Testung der in den folgenden Beipielen hergestellten Katalysatoren für die Zersetzung von Distickstoffmonoxid diente ein 50 cm langes Reaktionsrohr mit einem Innendurchmesser von 14 mm. Der untere, von außen beheizte Teil des Rohres war mit 30 ml kugelförmigem Inertmaterial aus Steatit gefüllt, um das Distickstoffmonoxid enthaltende Gas auf die jeweils gewünschte Reaktionstemperatur aufzuwärmen. über der Inertschicht wurden jeweils 20 ml des zu testenden Katalysators eingefüllt.

Beispiel 1

200 g eines Aluminiumoxid-Trägers (BET-Oberfläche: 8,75 $m^2/g$, Wasseraufnahme: 0,49 $cm^3/g$) wurden mit einer Lösung aus 36 g sec.-Butylamin, 9 g wasser und 41 g Silbernitrat imprägniert, anschließend eine Stunde lang bei 20°C gelagert und dann bei 240°C in einem Umluftofen getempert. Der so erhaltene Katalysator enthielt 10,7 Gew.-% Silber.

Vergleichsbeispiel 1

Wie in Beispiel 1 beschrieben, wurde ein Katalysator hergestellt, mit dem Unterschied, daß anstelle das Aluminiumoxid-Trägers mit einer BET-Ober-fläche von 8,75 $m^2/g$ ein Aluminiumoxid-Träger mit einer BET-Oberfläche von 4,6 $m^2/g$, Wasseraufnahme 0,29 $cm^3/g$, verwendet wurde. Der fertige Katalysator enthielt 10,7 Gew.-% metallisches Silber.

In der folgenden Tabelle sind die Ergebnisse zusammengestellt, die mit verschiedenen a) Gasgemischen, b) Temperaturen, c) Raumgeschwindigkeiten und d) Laufzeiten erhalten wurden.

| Katalysator | | Eingangsgas [vol-%] | | | | Temperatur [$^{\circ}$C] | Katalysatorbelastung [$h^{-1}$] | Laufzeit [h] | Umgesetztes $N_2O$ [%] |
|---|---|---|---|---|---|---|---|---|---|
| | | $N_2O$ | $NO_2$ | $H_2O$ | Luft | | | | |
| | Beispiel 1 | 20,8 | – | – | 79,2 | 480 | 5000 | 850 | 99,8 |
| A | Vgl.-Bsp 1 | 19,8 | – | – | 80,2 | 480 | 5000 | 48 | 99,2 |
| | Vgl.-Bsp 1 | 19,8 | – | – | 80,2 | 480 | 5000 | 450 | 84,0 |
| B | Beispiel 1 | 21,8 | 13,7 | – | 64,5 | 580 | 6800 | 850 | 99,4 |
| | Vgl.-Bsp 1 | 20,6 | 12,4 | – | 67,0 | 580 | 4200 | 450 | 64,8 |
| C | Beispiel 1 | 21,0 | 11,0 | 11,0 | 58,0 | 580 | 4750 | 850 | 98,1 |
| | Beispiel 1 | 21,0 | – | 10,0 | 69,0 | 480 | 5000 | 850 | 99,8 |

EP 0 475 173 B1

Aus den Ergebnissen der Versuchsreihe A ist zu ersehen, daß der Katalysator des Vergleichsbeispiels 1 zwar eine hohe Anfangsaktivität aufweist, die jedoch bereits nach einer Laufzeit von 450 Stunden auf 84% umgesetztes $N_2O$ abfällt, während der erfindungrgemäße Katalysator auch nach einer Laufzeit von 850 Stunden eine hohe Aktivität, ausgedrückt durch einen 99,8%igen Umsatz, aufweist.

Aus den Ergebnissen der Versuchsreihe B ist bei der Behandlung von zusätzlich $NO_2$ enthaltenden Gasgemischen zu ersehen, daß der Katalysator des Vergleichsbeispiels 1 bereits nach einer Laufzeit von 450 Stunden sogar bei deutlich geringerer Katalysatorbelastung in seiner Aktivität merklich abgefallen ist.

Die Ergebnisse der Versuchsreihe C zeigen, daß der erfindungsgemäße Katalysator bei der Behandlung von Gasgemischen, die neben $N_2O$ auch Wasserdampf enthalten, seine hohe Aktivität beibehält.

Beispiel 2

100 g eines Aluminiumoxides mit einer SET-Oberfläche von 16 m²/g, (wasseraufnahme: 0,46 cm3/g) wurden mit einer Lösung aus 26,5 g sec.-Butylamin, 6,4 g Wasser und 28,0 g Silbernitrat imprägniert, eine Stunde lang bei Raumtemperatur gelagert und anschließend bei 240°C im Stickstoffstrom getempert. Der so erhaltene Katalysator enthielt 15,0 Gew.-% metallisches Silber.

In der folgenden Tabelle sind die Ergebnisse bezüglich der $N_2O$-Zersetzung mit dem Katalysator gemäß Beispiel 2 wiedergegeben.

EP 0 475 173 B1

| Katalysator | Eingangsgas [vol-%] | | | | Temperatur [°C] | Katalysatorbelastung [h$^{-1}$] | Laufzeit [h] | Umgesetztes N$_2$O [%] |
|---|---|---|---|---|---|---|---|---|
| | N$_2$O | NO$_2$ | H$_2$O | Luft | | | | |
| Beispiel 2 | 20,4 | – | – | 79,6 | 480 | 5000 | 750 | 99,5 |
| Beispiel 2 | 21,0 | 11,0 | 11,0 | 57,0 | 580 | 6650 | 700 | 98,3 |

**Patentansprüche**

**Patentansprüche für folgende Vertragsstaaten : AT, BE, CH, DE, DK, FR, GB, IT, LI, NL, SE**

1. Silber enthaltender Katalysator für die Zersetzung von reinem oder in Gasgemischen enthaltenem Distickstoffmonoxid, dadurch gekennzeichnet, daß das Silber auf einen Träger aus Aluminiumoxid mit einer BET-Oberfläche von 5 bis 25 m²/g aufgebracht ist und der Katalysator im wesentlichen frei von Co, Fe und Ni ist.

2. Verfahren zur Zersetzung von reinem oder in Gasgemischen enthaltenem Distickstoffmonoxid bei erhöhten Temperaturen in die Elemente in Gegenwart von silberhaltigen Katalysatoren, dadurch gekennzeichnet, daß das Silber auf einen Träger aus Aluminiumoxid aufgebracht ist, der eine BET-Oberfläche von 5 bis 25 m²/g aufweist.

3. Verfahren nach Anspruch 2, dadurch gekennzeichnet, daß der Katalysator einen Silbergehalt von 5 bis 25 Gew.-% aufweist.

4. Verfahren nach den Ansprüchen 2 und 3, dadurch gekennzeichnet, daß der Katalysator einen Silbergehalt von 10 bis 20 Gew.-% aufweist.

**Patentansprüche für folgenden Vertragsstaat : ES**

1. Verfahren zur Herstellung eines Silber enthaltenden Katalysators für die Zersetzung von reinem oder in Gasgemischen enthaltenem Distickstoffmonoxid, dadurch gekennzeichnet, daß man das Silber auf einen Träger aus Aluminiumoxid mit einer SET-Oberfläche von 5 bis 25 m²/g aufbringt.

2. Verfahren nach Anspruch 1, dadurch gekennzeichnet, daß man das Silber in Form einer reduzierbaren Silberverbindung in Lösung, gegebenenfalls unter Zusatz eines Amins, aufbringt und es anschließend an die Trocknung in die metallische Form überführt.

3. Verfahren zur Zersetzung von reinem oder in Gasgemischen enthaltenem Distickstoffmonoxid bei erhöhten Temperaturen in die Elemente in Gegenwart von silberhaltigen Katalysatoren, dadurch gekennzeichnet, daß ein Katalysator eingesetzt wird, bei dem das Silber auf einen Träger aus Aluminiumoxid aufgebracht ist, der eine BET-Oberfläche von 5 bis 25 m²/g aufweist.

4. Verfahren nach Anspruch 3, dadurch gekennzeichnet, daß ein Katalysator eingesetzt wird, der einen Silbergehalt von 5 bis 25 Gew.-% aufweist.

5. Verfahren nach den Ansprüchen 3 und 4, dadurch gekennzeichnet, daß ein Katalysator eingesetzt wird, der einen Silbergehalt von 10 bis 20 Gew.-% aufweist.

**Claims**

**Claims for the following Contracting States : AT, BE, CH, DE, DK, FR, GB, IT, LI, NL, SE**

1. A silver-containing catalyst for decomposing dinitrogen monoxide which is pure or present in gas mixtures, wherein the silver is applied to an alumina carrier with a BET surface area of from 5 to 25 m²/g and the catalyst is substantially free from Co, Fe and Ni.

2. A process for decomposing dinitrogen monoxide which is pure or present in gas mixtures at elevated temperatures into the elements in the presence of silver-containing catalysts, wherein the silver is applied to an alumina carrier which has a BET surface area of from 5 to 25 m²/g.

3. A process as claimed in claim 2, wherein the catalyst has a silver content of from 5 to 25% by weight.

4. A process as claimed in claims 2 and 3, wherein the catalyst has a silver content of from 10 to 20% by weight.

**Claims for the following Contracting State : ES**

1. A process for preparing a silver-containing catalyst for decomposing dinitrogen monoxide which is pure or present in gas mixtures, wherein the silver is applied to an alumina carrier with a BET surface area of from 5 to 25 $m^2$/g.

2. A process as claimed in claim 1, wherein the silver is applied in the form of a reducible silver compound in solution in the presence or absence of an amine and, after drying, converted into the metallic form.

3. A process for decomposing dinitrogen monoxide which is pure or present in gas mixtures at elevated temperatures into the elements in the presence of silver-containing catalysts, which comprises using a catalyst in which the silver is applied to an alumina carrier which has a BET surface area of from 5 to 25 $m^2$/g.

4. A process as claimed in claim 3, wherein the catalyst has a silver content of from 5 to 25% by weight.

5. A process as claimed in claims 3 and 4, wherein the catalyst has a silver content of from 10 to 20% by weight.

**Revendications**

**Revendications pour les Etats contractants suivants : AT, BE, CH, DE, DK, FR, GB, IT, LI, NL, SE**

1. Catalyseur contenant de l'argent pour la décomposition d'oxyde nitreux pur ou contenu dans des mélanges gazeux, caractérisé en ce que l'argent est fixé sur un support d'oxyde d'aluminium ayant une surface BET de 5 à 25 $m^2$/g et en ce que le catalyseur est essentiellement dépourvu de Co, de Fe et de Ni.

2. Procédé pour la décomposition en ses éléments d'oxyde nitreux pur ou contenu dans des mélanges gazeux, à des températures élevées, en présence de catalyseurs contenant de l'argent, caractérisé en ce que l'argent est fixé sur un support d'oxyde d'aluminium qui présente une surface BET de 5 à 25 $m^2$/g.

3. Procédé selon la revendication 2, caractérisé en ce que le catalyseur a une teneur en argent de 5 à 25% en poids.

4. Procédé selon les revendications 2 et 3, caractérisé en ce que le catalyseur a une teneur en argent de 10 à 20% en poids.

**Revendications pour l'Etat contractant suivant : ES**

1. Procédé de préparation d'un catalyseur contenant de l'argent pour la décomposition d'oxyde nitreux pur ou contenu dans des mélanges gazeux, caractérisé en ce qu'on fixe l'argent sur un support d'oxyde d'aluminium ayant une surface BET de 5 à 25 $m^2$/g.

2. Procédé selon la revendication 1, caractérisé en ce qu'on fixe l'argent sous la forme d'un composé réductible de l'argent en solution, éventuellement avec addition d'une amine, et on le convertit en la forme métallique à la suite du séchage.

3. Procédé pour la décomposition en ses éléments d'oxyde nitreux pur ou contenu dans des mélanges gazeux, à des températures élevées, en présence de catalyseurs contenant de l'argent, caractérisé en ce qu'on utilise un catalyseur dans lequel l'argent est fixé sur un support d'oxyde d'aluminium qui présente une surface BET de 5 à 25 $m^2$/g.

4. Procédé selon la revendication 3, caractérisé en ce qu'on utilise un catalyseur qui présente une teneur en argent de 5 a 25% en poids.

5. Procédé selon les revendications 3 et 4, caractérisé en ce qu'on utilise un catalyseur qui présente une teneur en argent de 10 à 20% en poids.